# NEUE EUROPÄISCHE PATENTSCHRIFT

(11) **EP 1 706 613 B2**
(45) Veröffentlichungstag und Bekanntmachung des Hinweises auf die Entscheidung über den Einspruch: **07.02.2018**
(45) Hinweis auf die Patenterteilung: 07.04.2010
(21) Anmeldenummer: 05726245.3
(22) Anmeldetag: 24.01.2005
(51) Int. Cl.: F02B 23/06, F02F 3/26

(54) **VERBRENNUNGSMULDE IM BODEN EINES KOLBENS FÜR EINEN DIESELMOTOR**
COMBUSTION RECESS IN THE HEAD OF A PISTON FOR A DIESEL ENGINE
CHAMBRE DE COMBUSTION DANS LE FOND D'UN PISTON DE MOTEUR DIESEL

(30) Priorität: 24.01.2004 DE 102004003658
(43) Veröffentlichungstag der Anmeldung: 04.10.2006
(73) Patentinhaber: MAHLE GMBH, 70376 Stuttgart (DE)
(72) Erfinder: ISSLER, Wolfgang, 71409 Schwaikheim (DE)
(74) Vertreter: Stumkat, Ulrich
(86) Internationale Anmeldenummer: PCT/DE2005/000089
(87) Internationale Veröffentlichungsnummer: WO 2005/071239

(56) Entgegenhaltungen:
- EP-A- 0 937 888
- EP-A1- 0 105 933
- DE-A1- 10 015 709
- DE-B- 1 014 782
- DE-C- 721 889
- DE-U1- 8 026 159
- FR-A- 997 692
- FR-A- 1 411 601
- PATENT ABSTRACTS OF JAPAN Bd. 008, Nr. 274 (M-345), 14. Dezember 1984 (1984-12-14) & JP 59 145344 A (MAZDA KK), 20. August 1984 (1984-08-20)

## Beschreibung

Die Erfindung betrifft eine Verbrennungsmulde im Boden eines Kolbens für einen Dieselmotor nach dem Oberbegriff des Anspruches 1.

In einem direkt einspritzenden Dieselmotor findet die Verbrennung des Kraftstoff-Luft-Gemisches üblicherweise in einer Verbrennungsmulde statt, die in den Boden der Kolben des Dieselmotors eingeformt ist. Bekannt ist hierbei, den radial äußeren Randbereich der Verbrennungsmulde mit einem Hinterschnitt zu versehen. Bereits in der Deutschen Patentschrift Nr. 721889 wurde als Vorteil hiervon eine in einem weiten Drehzahlbereich des betreffenden Dieselmotors konstante Drehmomentenkurve genannt. Gemäß der Deutschen Auslegeschrift 1055873 liegt die Ursache hiervon in einer durch den Hinterschnitt bewirkten Verwirbelung und einer damit einhergehenden Verbesserung der Verdampfung des in die Verbrennungsmulde eingespritzten Kraftstoffes.

Aus der Europäischen Patentschrift EP 0 105 933 ist ein Kolben für einen Dieselmotor mit einer außermittig angeordneten Verbrennungsmulde bekannt, in deren radial äußeren Randbereich über mehrere Einspritzöffnungen einer Brennstoffdüse Kraftstoff eingespritzt wird. Zur Verbesserung der Verwirbelung und damit der Verdampfung des Kraftstoffes weist der Kolben eine Vielzahl von gleichmäßig über den Randbereich verteilten Ausnehmungen auf.

Der genannte Stand der Technik hat den Nachteil, dass wegen der Verbrennung des Kraftstoff-Luftgemisches insbesondere der radial äußere Rand der Verbrennungsmulde einer sehr hohen Temperaturbelastung ausgesetzt ist, die zu einer Beschädigung der Verbrennungsmulde führen kann.

In dem deutschen Gebrauchsmuster DE 80 26 159 wird zur Lösung dieses Problemes vorgeschlagen, zwischen dem Rand einer mittig angeordneten Verbrennungsmulde und dem Kolbenbodenrand einen Kühlkanal vorzusehen. Soll der aus dem letztgenannten Stand der Technik bekannte Kolben in einem Zweiventilmotor verwendet werden, in dem die Brennstoffdüsen neben dem symmetrisch zur Kolbenlängsachse liegenden Ein- und Auslassventil, d.h., außermittig in Bezug auf die Kolbenlängsachse angeordnet ist, ist vorteilhafterweise auch die Verbrennungsmulde außermittig zur Kolbenlängsachse angeordnet, damit der Kraftstoff von der Brennstoffdüse problemlos in die Verbrennungsmulde eingespritzt werden kann.

Hierbei ergibt sich das Problem, dass zwischen dem Feuersteg des Kolbens und dem dem Feuersteg nächst liegenden Randbereich der außermittig angeordneten Verbrennungsmulde kein Platz für einen Kühlkanal vorhanden ist, sodass zumindest in diesem Bereich der Kühlkanal weiter entfernt vom Kolbenboden im Nabenbereich des Kolbens angeordnet werden muss. Dies hat den Nachteil, dass in diesem Bereich der Rand der Verbrennungsmulde, der Muldenhals und auch die thermisch sehr hoch belastete Verdichtungsringnut schlecht gekühlt werden und Gefahr laufen, beschädigt zu werden. Als weiterer Nachteil ergibt sich hierbei, dass der im Übrigen nahe dem Kolbenboden liegende Kühlkanal eine gegenüber der Kolbenlängsachse schräge Lage einnimmt, was fertigungstechnische Probleme mit sich bringt.

Ein Kolben gemäss dem Oberbegriff des Anspruchs 1 ist aus EP 0937888 bekannt.

Letztlich tritt hierbei das Problem auf, dass der Abstand zwischen dem im Randbereich des Kolbenbodens angeordneten Teil des Kühlkanals und dem hiervon entfernt liegenden Randbereich der außermittig angeordneten Verbrennungsmulde so groß wird, dass auch die Kühlung dieses Randbereiches der Verbrennungsmulde beeinträchtigt wird.

Diese Nachteile des Standes der Technik zu vermeiden ist Aufgabe der Erfindung. Gelöst wird die Aufgabe mit den im Kennzeichen des Hauptanspruches stehenden Merkmalen. Zweckmäßige Ausgestaltungen der Erfindung sind Gegenstand der Unteransprüche.

Einige Ausführungsbeispiele der Erfindung werden im Folgenden anhand der Zeichnungen beschrieben. Es zeigen
- Fig. 1: eine Draufsicht auf einen Kolben gemäß der Erfindung mit einer außermittig angeordneten Verbrennungsmulde,
- Fig. 2: einen Schnitt durch den Bodenbereich des Kolbens gemäß Figur 1 entlang der Linie II-II,
- Fig. 3: eine Draufsicht auf einen Kolben mit einer außermittig angeordneten Verbrennungsmulde, die einen elliptisch geformten Muldenhals aufweist,
- Fig. 4: eine Draufsicht auf einen Kolben mit einer außermittig angeordneten Verbrennungsmulde, die auf einer Seite keinen Hinterschnitt aufweist,
- Fig. 5: einen Schnitt durch den Bodenbereich des Kolbens gemäß Figur 4 entlang der Linie V-V,
- Fig. 6: einen Schnitt durch den Bodenbereich des Kolbens gemäß Figur 4 entlang der Linie VI-VI,
- Fig. 7: eine Draufsicht auf den Kolben gemäß Figur 4, der eine in der Mitte der Verbrennungsmulde angeordnete, hökkerartige Anformung aufweist,
- Fig. 8: einen Schnitt durch den Bodenbereich des Kolbens gemäß Figur 7 entlang der Linie VIII-VIII,
- Fig. 9: einen Schnitt durch den Bodenbereich des Kolbens gemäß Figur 7 entlang der Linie IX-IX,
- Fig. 10: eine Draufsicht auf einen Kolben mit einer außermittig angeordneten Verbrennungsmulde, die sich aus zwei, im Schnitt halbkreisförmigen Bereichen zusammensetzt, und die über ihren gesamten Umfang hinterschnitten ist,
- Fig. 11: eine Draufsicht auf einen Kolben mit einer außermittig angeordneten Verbrennungsmulde, die sich aus zwei, im Schnitt halbkreisförmigen Bereichen zusammensetzt, und die auf zwei einander gegenüberliegenden Seiten keine Hinterschnitte aufweist,
- Fig. 12 bis 14: Draufsichten auf Kolben mit außermittig angeordneten Verbrennungsmulden, deren Formen der Anzahl und der Ausrichtung der Bohrungen von Einspritzdüsen angepasst sind.

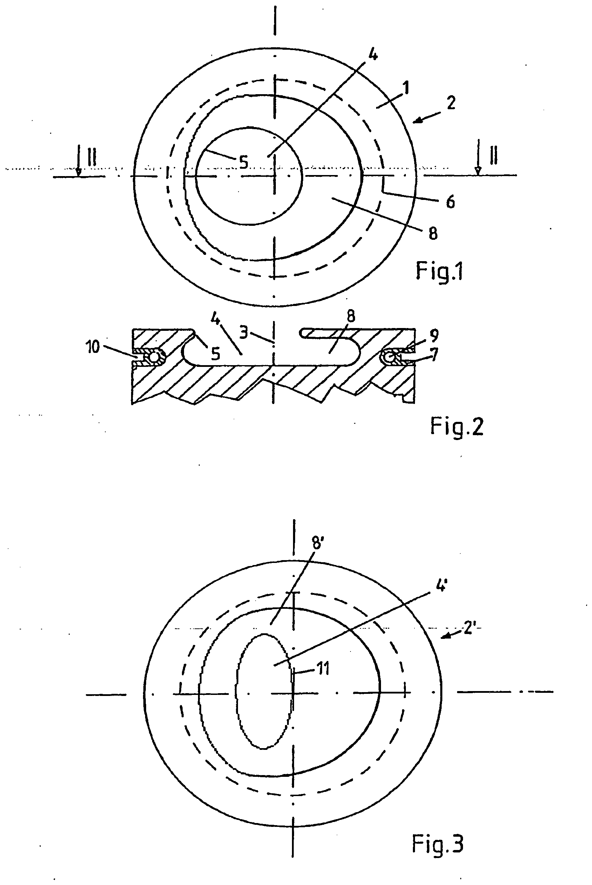

Fig. 1 zeigt eine Draufsicht auf den Boden 1 eines Kolbens 2 für einen Dieselmotor, in den eine außermittig zur Kolbenlängsachse 3 angeordnete Verbrennungsmulde 4 mit einer unrund ausgebildeten, radial äußeren Begrenzung und mit einem kreisförmigen Muldenhals 5 eingeformt ist. Obwohl die radial äußeren Begrenzungen der Verbrennungsmulden in den Draufsichten gemäß den folgenden Figuren nicht sichtbar sind, sind sie nicht gestrichelt gezeichnet, da sich der Kern der vorliegenden Erfindung insbesondere auf Form und Anordnung dieser Mulden bezieht. Gestrichelt eingezeichnet ist in Figur 1 aber die radial innere Begrenzung 6 eines gekühlten Ringträgers 7, der in Fig. 2 dargestellt ist, einem Schnitt durch den Bodenbereich des Kolbens 2 gemäß Fig. 1 entlang der Linie II-II. Fig. 2 zeigt auch die Querschnittsform der Verbrennungsmulde 4 mit dem Muldenhals 5 und mit dem die gesamte Verbrennungsmulde 4 umgebenden Hinterschnitt 8.

Hierbei kommt die radial äußere Begrenzung des Hinterschnittes 8 der Verbrennungsmulde 4 der radial inneren Begrenzung des gekühlten Ringträgers 7 in allen Bereichen so nahe, dass vom Kühlkanal 9 nicht nur die Nut 10 für einen in den Figuren nicht dargestellten Verdichtungsring sondern zudem alle Randbereiche der Verbrennungsmulde 4 gekühlt werden.

Im Unterschied zu der Verbrennungsmulde 4 gemäß den Figuren 1 und 2 ist der in Figur 3 dargestellte Muldenhals 11 elliptisch ausgebildet. Der Vorteil hiervon liegt darin, dass der sich hierdurch ergebende Hinterschnitt 8' nahe dem Hauptachsenbereich des Muldenhalses 11 gegenüber dem in den Figuren 1 und 2 dargestellten Ausführungsbeispiel verkleinert ist.

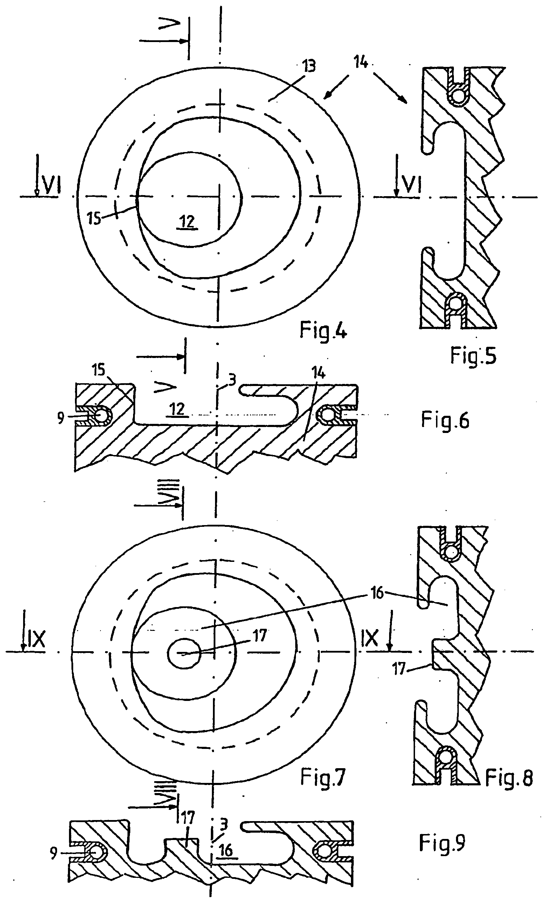

Die in den Figuren 4 bis 6 dargestellte Verbrennungsmulde 12 ist außermittig zur Kolbenlängsachse 3 im Bereich des Bodens 13 des Kolbens 14 angeordnet und unrund ausgebildet. Wie insbesondere der Schnitt gemäß Figur 6 durch den Bodenbereich des Kolbens 14 zeigt, weist die Verbrennungsmulde 12 im Bereich 15 keinen Hinterschnitt auf, was im Bereich 15 eine bestmögliche Absenkung der Muldenrand- und der Muldenhalstemperatur aufgrund der Kühlwirkung des Kühlkanals 9 mit sich bringt.

Die Ausgestaltung der Verbrennungsmulde 16 gemäß den Figuren 7 bis 9 weist eine mittig angeordnete, höckerartig ausgebildete Anformung 17 auf, die für eine bessere Verwirbelung und damit für eine Verbesserung der Verbrennung des in die Verbrennungsmulde 16 eingesprühten Kraftstoffes sorgt.

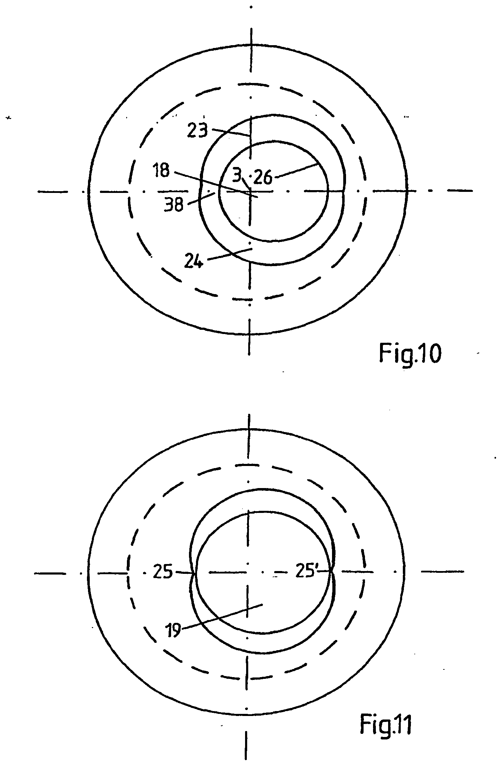

Die in den Figuren 10 bis 14 dargestellten Ausgestaltungen von Verbrennungsmulden 18 bis 22 weisen Formen auf, die der Ausrichtung und der Anzahl der Bohrungen der Einspritzdüsen und der Breite der davon ausgehenden und in die Verbrennungsmulden 18 bis 22 eingesprühten Brennstrahlen angepasst sind. So ist die Verbrennungsmulde 18 gemäß Figur 10 außermittig zur Kolbenlängsachse 3 angeordnet, mit einem kreisförmigen Muldenhals 26 versehen und aus zwei im Schnitt kreisbogenförmigen und einander gegenüberliegenden Bereichen 23 und 24 zusammengesetzt. Sie weist über ihren gesamten Umfang einen Hinterschnitt 38 auf.

Die Verbrennungsmulde 19 gemäß Figur 11 unterscheidet sich von der Verbrennungsmulde 18 (Fig. 10) dadurch, dass sie an zwei einander gegenüberliegenden Bereichen 25 und 25' keinen Hinterschnitt aufweist.

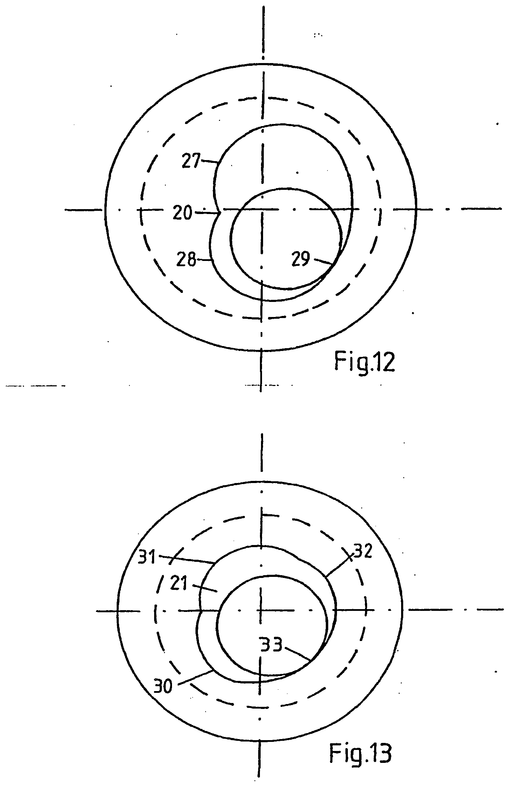

Die Verbrennungsmulde 20 gemäß Fig. 12 unterscheidet sich von den Verbrennungsmulden 18 und 19 gemäß Fig. 10 und 11 dadurch, dass der Muldenhals nicht symmetrisch zur Verbrennungsmulde 20 angeordnet ist und im Bereich 29 keinen Hinterschnitt aufweist. Sie setzt sich im Wesentlichen aus zwei Kreissegmenten 27 und 28 zusammen.

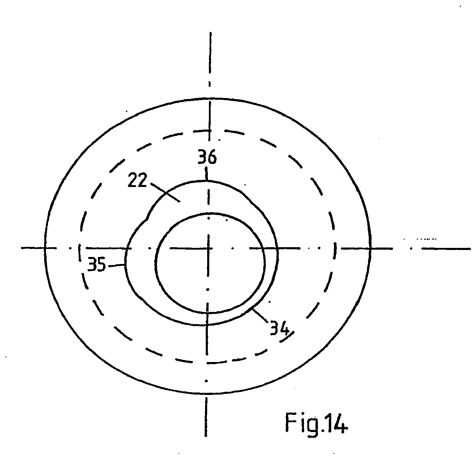

Die Verbrennungsmulden 21 und 22 gemäß den Figuren 13 und 14 bestehen aus jeweils drei Kreissegmenten. Es ist aber auch möglich, die Verbrennungsmulden aus mehr als drei Kreissegmenten zusammenzusetzen. Größe und Anordnung eines jeden Kreissegmentes kann hierbei der Richtung und der Breite des in das jeweilige Kreissegment eingeleiteten Brennstrahles entsprechen, wobei Einspritzdüsen mit Bohrungen unterschiedlichen Durchmessers zum Einsatz kommen.

Die Verbrennungsmulde 21 gemäß Figur 13 ist aus den drei Kreissegmenten 30, 31 und 32 und einem Bereich 33 ohne Hinterschnitt gebildet.

Die in Figur 14 dargestellte Verbrennungsmulde 22 besteht aus drei Kreissegmenten 34, 35, 36 unterschiedlichen Durchmessers und aus einem umlaufenden Hinterschnitt mit über den Umfang variierendem Querschnitt.

Weitere in den Figuren nicht dargestellte Ausgestaltungen von Verbrennungsmulden sind dadurch gekennzeichnet, dass hierbei nicht nur die radial äußeren Begrenzungen der Verbrennungsmulden sondern auch deren Muldenhälse unrund ausgebildet sind. Wenn hierbei in Betracht gezogen wird, dass die Herstellung der Verbrennungsmulden in zwei oder mehreren Bearbeitungstufen mit jeweils achssymmetrischer Bearbeitung erfolgt, wobei der Kolben zwischen den Bearbeitungsphasen in die entsprechende Richtung verschoben wird, wird deutlich, dass hierdurch die Möglichkeit gegeben ist, den Verbrennungsmulden mit Ausnahme von teilkreisförmigen Eckbereichen im Wesentlichen die Form eines Dreiecks, eines Vierecks oder eines Mehrecks zu geben.

### Bezugszeichenliste

- 1: Boden des Kolbens 2
- 2, 2': Kolben
- 3: Kolbenlängsachse
- 4, 4': Verbrennungsmulde
- 5: Muldenhals
- 6: radial innere Begrenzung des gekühlten Ringträgers 7
- 7: gekühlter Ringträger
- 8, 8': Hinterschnitt
- 9: Kühlkanal
- 10: Nut für einen Verdichtungsring
- 11: elliptischer Muldenhals
- 12: Verbrennungsmulde
- 13: Boden des Kolbens 14
- 14: Kolben
- 15: Bereich der Verbrennungsmulde 12
- 16: Verbrennungsmulde
- 17: Anformung
- 18, 19, 20, 21, 22: Verbrennungsmulde
- 23, 24: Bereich der Verbrennungsmulde 18
- 25, 25': Bereich der Verbrennungsmulde 19
- 26: Muldenhals
- 27, 28: Kreissegment
- 29: Bereich der Verbrennungsmulde 20
- 30, 31, 32: Kreissegment
- 33: Bereich der Verbrennungsmulde 21
- 34, 35, 36: Kreissegment
- 38: Hinterschnitt

## Patentansprüche

1. Verbrennungsmulde (4, 4' 12, 16, 18-22) im Boden (1, 13) eines Kolbens (2, 2', 14) für einen Dieselmotor
- mit einem im radial äußeren, kolbenbodenseitigen Randbereich des Kolbens (2, 2', 14) angeordneten, durch einen Kühlkanal (9), gekühlten Ringträger (7),
- wobei die Verbrennungsmulde (4, 12, 16, 18-22) sowie deren Muldenhals (5, 11, 26) außermittig zur Kolbenlängsachse (3) angeordnet ist,
**dadurch gekennzeichnet,**
- **dass** in mindestens einem Teil des radial äußeren Randbereiches der Verbrennungsmulde (4, 12, 16, 18-22) ein sich bezüglich des Muldenhalses (5, 11, 26) unterschiedlich weit nach radial außen erstreckender Hinterschnitt (8, 8', 38) insoweit eingeformt ist, dass der gesamte radial äußere Randbereich der Verbrennungsmulde (4, 12, 16, 18-22) für eine Kühlwirkung des gekühlten Ringträgers (7) auf die Verbrennungsmulde (4, 12, 16, 18-22) ausreichend nahe dem Kühlkanal (9) angeordnet ist, und dass in der Mitte des Bodens der Verbrennungsmulde (16) eine höckerartig ausgebildete Anformung (17) angeordnet ist.

2. Verbrennungsmulde (4, 12, 16, 18-22) nach Anspruch 1, **gekennzeichnet durch** einen kreisförmigen Muldenhals (5, 26).

3. Verbrennungsmulde (4') nach Anspruch 1, **gekennzeichnet durch** einen oval geformten Muldenhals (11).

4. Verbrennungsmulde (12, 16, 20, 21, 22) nach einem der vorhergehenden Ansprüche, **gekennzeichnet durch** mindestens einen radial äußeren Randbereich mit Hinterschnitt und mindestens einen radial äußeren Randbereich (15, 25, 25', 29, 33) ohne Hinterschnitt.

5. Verbrennungsmulde (18 bis 20) nach einem der vorhergehenden Ansprüche, **gekennzeichnet durch** zwei einander gegenüberliegende, im Wesentlichen kreissegmentförmige Bereiche (23, 24, 27, 28).

6. Verbrennungsmulde (21, 22) nach Anspruch 1 bis 5, **gekennzeichnet durch** mehr als zwei kreissegmentförmige Bereiche (30-32, 34-36).

7. Verbrennungsmulde (18-22) nach Anspruch 5 oder 6, **dadurch gekennzeichnet, dass** die kreissegmentförmigen Bereiche (23, 24, 27, 28, 30-32, 34-36) ineinander übergehend bearbeitet sind.

8. Verbrennungsmulde (4, 12, 16, 18-22) nach einem der vorhergehenden Ansprüche, **dadurch gekennzeichnet, dass** in die Verbrennungsmulde (4, 12, 16, 18-22) Kraftstoff über Einnspritzdüsen eingespritzt wird, deren Bohrungen derart dimensioniert und angeordnet sind, dass die Breite und die Ausrichtung der Kraftstoffstrahlen den lokalen Erstreckungen der zugehörigen Muldenbereiche angepasst sind.

## Claims

1. Combustion recess (4, 4', 12, 16, 18-22) in the head (1, 13) of a piston (2, 2', 14) for a diesel engine,
- having a ring carrier (7), which is cooled by a cooling duct (9), in the radially outer edge area of the piston (2, 2', 14) near the piston head,
- wherein the combustion recess (4, 12, 16, 18-22) as well as its recess neck (5, 11, 26) is arranged eccentrically in relation to the lengthwise axis of the piston (3),
**characterised in that:**
- in at least part of the radially outer edge area of the combustion recess (4, 12, 16, 18-22), an undercut (8, 8', 38) extends radially outward by a different amount with reference to the recess neck (5, 11, 26) and is formed such that the entire radially outer edge area of the combustion recess (4, 12, 16, 18-22) is situated sufficiently near the cooling duct (9) for the cooled ring carrier (7) to cool the combustion recess (4, 12, 16, 18-22), and that a bump-like formation (17) is located in the middle of the floor of the combustion recess (16).

2. Combustion recess (4, 12, 16, 18-22) according to claim 1, **characterised by** a circular recess neck (5, 26).

3. Combustion recess (4') according to claim 1, **characterised by** an oval recess neck (11).

4. Combustion recess (12, 16, 20, 21, 22) according to one of the prior claims, **characterised by** at least one radially outside edge area with an undercut, and at least one radially outside edge area (15, 25, 25', 29, 33) without an undercut.

5. Combustion recess (18 to 20) according to one of the prior claims, **characterised by** two opposite areas essentially in the shape of a circle segment (23, 24, 27, 28).

6. Combustion recess (21, 22) according to claim 1 to 5, **characterised by** more than two areas in the shape of a circle segment (30-32, 34-36).

7. Combustion recess (18-22) according to claim 5 or 6, **characterised in that** the areas in the shape of a circle segment (23, 24, 27, 28, 30-32, 34-36) are merging evenly into each other.

8. Combustion recess (4, 12, 16, 18-22) according to one of the preceding claims, **characterised in that** the fuel is sprayed with fuel injectors into the combustion recess (4, 12, 16, 18-22), whose drills are dimensioned and designed in such a manner, that the breadth and the adjustment of the fuel jets are adjusted to the local extensions of the related recess areas.

## Revendications

1. Cuvette de combustion (4, 4', 12, 16, 18 à 22) située dans le fond (1, 13) d'un piston (2, 2', 14) pour un moteur diesel,
- avec un support annulaire (7), qui es refroidi par un canal de refroidissement (9) et disposé dans la zone de bordure radialement extérieure du piston (2, 2', 14), côté fond du piston,
- la cuvette de combustion (4, 12, 16, 18 à 22) ainsi que son col de cuvette (5, 11, 26) étant disposés de manière excentrée par rapport à l'axe longitudinal du piston (3),
**et caractérisée par:**
- une contre-dépouille (8, 8', 38) s'étendant radialement vers l'extérieur de manière variable par rapport au col de cuvette (5, 11, 26) et moulée dans au moins une partie de la zone de bordure radialement extérieure de la cuvette de combustion (4, 12, 16, 18 à 22) ; l'ensemble de la zone de bordure radialement extérieure de la cuvette de combustion (4, 12, 16, 18 à 22) est disposé sur la cuvette de combustion (4, 12, 16, 18 à 22) de manière suffisamment proche du canal de refroidissement (9) pour que se produise un refroidissement du support annulaire refroidi (7) ; un moulage (17) exécuté de manière analogue à une bosse est disposé au milieu du fond de la cuvette de combustion (16).

2. Cuvette de combustion (4, 12, 16, 18 à 22) selon la revendication 1, **caractérisée par** un col de cuvette (5, 26) de forme circulaire.

3. Cuvette de combustion (4') selon la revendication 1, **caractérisée par** un col de cuvette (11) de forme ovale.

4. Cuvette de combustion (12, 16, 20, 21, 22) selon l'une quelconque des revendications précédentes, **caractérisée par** au moins une zone de bordure radialement extérieure avec contre-dépouille et au moins une zone de bordure (15, 25, 25', 29, 33) radialement extérieure sans contre-dépouille.

5. Cuvette de combustion (18 à 20) selon l'une quelconque des revendications précédentes, **caractérisée par** deux zones (23, 24, 27, 28) situées l'une en face de l'autre, essentiellement en forme de segment de cercle.

6. Cuvette de combustion (21, 22) selon l'une quelconque des revendications 1 à 5, **caractérisée par** plus de deux zones en forme de segment de cercle (30 à 32, 34 à 36).

7. Cuvette de combustion (18 à 22) selon la revendication 5 ou 6, **caractérisée en ce que** les zones en forme de segment de cercle (23, 24, 27, 28, 30 à 32, 34 à 36) sont usinées de manière à se confondre l'une dans l'autre.

8. Cuvette de combustion (4, 12, 16, 18 à 22) selon l'une quelconque des revendications précédentes, **caractérisée en ce que** du carburant est injecté dans la cuvette de combustion (4, 12, 16, 18 à 22) par l'intermédiaire d'injecteurs dont les trous sont dimensionnés et disposés de manière à ce que la largeur et l'orientation des jets de carburant soient adaptées aux extensions locales des zones de cuvette associées.
